(19) Europäisches Patentamt

European Patent Office

Office européen des brevets

(11) **EP 0 715 231 A1**

(12) **DEMANDE DE BREVET EUROPEEN**

(43) Date de publication:
05.06.1996 Bulletin 1996/23

(51) Int Cl.6: **G03H 1/02**, G03H 1/08

(21) Numéro de dépôt: 95402647.2

(22) Date de dépôt: 23.11.1995

(84) Etats contractants désignés:
DE GB

(30) Priorité: 28.11.1994 FR 9414221

(71) Demandeur: FRANCE TELECOM
F-75015 Paris (FR)

(72) Inventeurs:
• De Bougrenet de la Tocnaye, Jean-Louis
F-29217 Le Conquet (FR)

• Hamam, Habib
F-29200 Brest (FR)
• Moignard, Renaud
F-29290 Guipronvel (FR)

(74) Mandataire: Dubois-Chabert, Guy et al
Société de Protection des Inventions
25, rue de Ponthieu
F-75008 Paris (FR)

(54) **Dispositif de diffraction de lumière utilisant des modulateurs spatiaux de lumière reconfigurable et l'effet Talbot fractionnaire**

(57) Ce dispositif comprend deux modulateurs spatiaux de lumière (M1, M2) adressables électriquement, à cristal liquide sur substrat semiconducteur, et au moins un séparateur de faisceau polarisant (2), le chemin optique entre les modulateurs étant égal à $(2k+1)$ $Z_T/4^n$, où k et n sont des nombres entiers naturels, n étant différent de zéro, et $Z_T$ est la distance de Talbot relative à un hologramme bipériodique obtenu au moyen de l'un des modulateurs et à l'une des périodes qui est égale au double de l'autre, ce qui permet d'obtenir un hologramme reconfigurable à quatre niveaux de ........................................ otiques.

FIG. 1

EP 0 715 231 A1

## Description

## DOMAINE TECHNIQUE

La présente invention concerne un dispositif de diffraction de lumière.
Elle s'applique notamment aux télécommunications optiques.

## ETAT DE LA TECHNIQUE ANTERIEURE

On connaît déjà des cellules acousto-optiques capables de défléchir des faisceaux lumineux suivant une dimension de l'espace, de façon rapide (à une fréquence de l'ordre de 100 kHz).

En utilisant deux cellules croisées de ce genre, il est possible de réaliser une déflexion des faisceaux lumineux suivant deux dimensions de l'espace.

L'efficacité d'une cellule acousto-optique seule est de l'ordre de 85%.

Deux cellules montées en cascade ont une efficacité totale d'environ 72%.

On connaît également des modulateurs spatiaux de lumière qui permettent d'obtenir des hologrammes reconfigurables et qui sont connus sous le sigle SBEASLM.

Ce sont des modulateurs spatiaux de lumière adressés électriquement, à substrat en silicium *("Silicon Backplane Electrically Addressed Spatial Light Modulators")*.

L'utilisation d'un tel SBEASLM en modulation de phase binaire pour réaliser un hologramme reconfigurable est mentionnée dans le document suivant auquel on se reportera :

(1) D.C. O'Brien et D.J. Douglas, "A compact holographically routed optical crossbar using a ferroelectric liquid-crystal over silicon spatial light modulator", Proc. Conf. on Optical Computing, Edinburgh, 1994.

Le SBEASLM dont il est question dans ce document (1) comprend un réseau de 256x256 pixels et utilise une couche de cristal liquide ferroélectrique et il est décrit dans le document suivant auquel on se reportera :

(2) D.J. Douglas, K.M. Johnson et R.A. Serati, 256x256 liquid-crystal-on-silicon spatial light modulator, Applied Optics, Vol.33, n°14, Mai 1994, p.2775 à 2784.

Pour le SBEASLM décrit dans ce document (2), le facteur de remplissage, défini comme le rapport entre l'aire de la partie optique active d'un pixel à l'aire total de ce pixel, vaut environ 60% et la fréquence d'affichage d'un hologramme complet est de 10 kHz.

Il est à noter que des facteurs de remplissage proches de 90% ont déjà été réalisés.

A ce sujet, on se reportera au document suivant :

(3) A. O'Hara, J.R. Hannah, i. Underwood, D.G. Vass et R.J. Holwill, "Mirror quality and efficiency improvements of reflective spatial light modulators by the use of dielectric coatings and chemical-mechanical polishing", Applied Optics, vol.32, n°28, Oct. 1993, p.5549 à 5556.

Les cellules acousto-optiques sont relativement coûteuses.

De plus, elles permettent seulement de réaliser la déflexion de faisceaux lumineux.

Elles ont donc une moins grande souplesse d'utilisation que les hologrammes calculés par ordinateur *("computer generated holograms")*.

Les SBEASLM à cristal liquide ferroélectrique permettent de réaliser des hologrammes de phases pures reconfigurables mais seuls deux niveaux de phase (0 et $\pi$) sont techniquement disponibles.

L'utilisation d'un hologramme à deux niveaux de phase présente un inconvénient.

En effet, il s'agit d'un hologramme réel et la reconstruction doit être à symétrie hermitienne pour obtenir une grande efficacité de diffraction.

## EXPOSE DE L'INVENTION

La présente invention a but de remédier aux inconvénients précédents.

La présente invention utilise l'effet Talbot fractionnaire pour réaliser un hologramme à quatre niveaux de phase à partir de deux hologrammes de phase binaires.

De façon précise, la présente invention a pour objet un dispositif de diffraction de lumière caractérisé en ce qu'il comprend :

- des premier et deuxième modulateurs spatiaux de lumière adressables électriquement (et donc reconfigurables), à cristal liquide sur substrat semiconducteur, chacun des premier et deuxième modulateurs fonctionnant par réflexion et permettant de créer un hologramme binaire reconfigurable, l'hologramme créé avec le premier modulateur étant périodique suivant deux directions perpendiculaires, la période suivant l'une de ces deux directions étant égale au double de l'autre période suivant l'autre direction, et

- au moins un séparateur de faisceau polarisant *("polarizing beam splitter"),* la lumière étant dirigée du premier vers le deuxième modulateur par l'intermédiaire de ce séparateur de faisceau, le chemin optique entre les premier et deuxième modulateurs étant égal à $(2k+1)Z_T/4^n$, où k et n sont des nombres entiers naturels, n étant différent de zéro, et $Z_T$ est la distance de Talbot relative à l'hologramme obtenu au moyen du premier modulateur et à ladite période,

les premier et deuxième modulateurs étant agencés par rapport au séparateur de faisceau polarisant de façon à obtenir un hologramme reconfigurable à quatre niveaux de phase.

L'utilisation, dans la présente invention, de deux modulateurs spatiaux de lumière adressables électriquement, à cristal liquide sur substrat semiconducteur, permet d'obtenir un dispositif susceptible d'avoir un haut degré d'intégration et un haut taux de reconfiguration.

De plus, le dispositif objet de l'invention permet d'obtenir un hologramme reconfigurable à quatre niveaux de phase $(0, \pi/2, \pi$ et $3\pi/2)$.

Un tel hologramme a une efficacité de diffraction nettement supérieure à celle d'un hologramme reconfigurable à deux niveaux de phase.

Le dispositif objet de l'invention est susceptible d'avoir une efficacité de diffraction comparable à celle des cellules acousto-optiques tout en ayant un plus grand nombre d'applications que ces cellules.

Selon un mode de réalisation préféré du dispositif objet de l'invention, le cristal liquide est ferroélectrique.

De préférence, l'angle de basculement *("tilt angle")* de ce cristal liquide ferroélectrique vaut sensiblement 45°.

Pour des questions d'intégration et de rapidité, on utilise de préférence dans la présente invention, en tant que premier et deuxième modulateurs, des SBEASLM (à substrat en silicium).

Ces SBEASLM ont un haut degré d'intégration et un haut taux de reconfiguration.

Pour une efficacité optique maximale, le facteur de remplissage doit être le plus grand possible.

De préférence, le nombre k, dont il a été question plus haut, est égal à zéro, pour obtenir un dispositif de grande compacité.

De préférence également, le nombre n, dont il a été question plus haut, est égal à 1, en vue d'obtenir un dispositif de grande efficacité.

Selon un premier mode de réalisation particulier du dispositif objet de l'invention, les premier et deuxième modulateurs spatiaux sont parallèles et placés de part et d'autre du séparateur de faisceau polarisant.

Selon un deuxième mode de réalisation particulier, les premier et deuxième modulateurs spatiaux sont perpendiculaires et adjacents.

Selon un troisième mode de réalisation particulier, les premier et deuxième modulateurs spatiaux sont perpendiculaires et adjacents et le dispositif comprend en outre :

- un miroir plan parallèle au deuxième modulateur, ce deuxième modulateur et le miroir plan étant placés de part et d'autre du séparateur de faisceau polarisant, et

- une lame quart d'onde parallèle au miroir plan et interposée entre celui-ci et le séparateur de faisceau polarisant.

Selon un quatrième mode de réalisation particulier, les premier et deuxième modulateurs spatiaux ont le même substrat, le dispositif comprend deux séparateurs de faisceau polarisants, qui sont respectivement placés en regard des premier et deuxième modulateurs spatiaux, et en outre :

- un miroir plan qui est parallèle à ces premier et deuxième modulateurs spatiaux, les séparateurs de faisceau polarisants étant interposés entre ce miroir plan et les premier et deuxième modulateurs spatiaux, et

- une lame quart d'onde qui est interposée entre ce miroir plan et les séparateurs de faisceau polarisants.

Selon un cinquième mode de réalisation particulier, les premier et deuxième modulateurs spatiaux ont le même substrat et le dispositif comprend en outre deux miroirs plans perpendiculaires, le séparateur de faisceau polarisant étant placé entre ces deux miroirs plans et les premier et deuxième modulateurs spatiaux.

Dans la présente invention les premier et deuxième modulateurs spatiaux peuvent être identiques.

Ceci est particulièrement intéressant dans le cas des quatrième et cinquième modes de réalisation particuliers mentionnés ci-dessus.

## BREVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :

- la figure 1 est une vue schématique en perspective d'un mode de réalisation particulier du dispositif objet de l'invention, utilisant deux SBEASLM de part et d'autre d'un cube séparateur polarisant,
- la figure 2 représente schématiquement le dispositif de la figure 1 en vue de dessus,
- les figures 3 et 4 sont des vues de dessus schématiques de variantes de réalisation du dispositif des figures 1 et 2,
- la figure 5 représente schématiquement, en vue de dessus, un dispositif conforme à l'invention, utilisant deux SBEASLM formés sur un même substrat, et
- la figure 6 représente schématiquement, en vue de dessus, une variante de réalisation du dispositif de la figure 5.

## EXPOSE DETAILLE DE MODES DE REALISATION PARTICULIERS

On rappelle que la présente invention utilise l'effet Talbot fractionnaire pour réaliser un hologramme à quatre niveaux de phases à partir de deux hologrammes de phases binaires.

Ces hologrammes sont respectivement formés grâce à deux modulateurs spatiaux de lumière adressables électriquement, à cristal liquide sur substrat semiconducteur, de préférence deux SBEASLM.

Supposons que l'on forme un hologramme à deux niveaux de phases et périodique suivant deux directions perpendiculaires U et V avec l'un des ces deux modulateurs et que l'on éclaire cet hologramme, ou premier hologramme, au moyen d'un source monochromatique.

La longueur d'onde de cette source en espace libre est notée $\lambda_0$ et l'indice de réfraction moyen du milieu dans lequel se propage la lumière de la source est noté N.

On considère le système de coordonnées cartésiennes u, v, w où :

- l'axe des u correspond à la direction U et
- l'axe des v correspond à la direction V.

L'axe des w est bien entendu perpendiculaire à l'axe des w et à l'axe des v.

On suppose que le premier hologramme est placé dans le plan w=0.

La période de ce premier hologramme selon u est notée $d_u$.

La période de ce premier hologramme selon v est notée $d_v$.

La répartition du champ électromagnétique dans le système de coordonnées u, v, w, pour ces périodes $d_u$ et $d_v$, est notée :

$$H_{d_u,d_v}(u, v, w)$$

La distance de Talbot Z $Z_T^{d_u}$ relative à la période $d_u$ est égale à la quantité suivante :

$$2d_u^2 / \lambda \text{ avec } \lambda = N.\lambda 0.$$

La distance de Talbot Z $Z_T^{d_v}$ relative à la période $d_v$ vaut quant à elle :

$$2d_v^2 / \lambda.$$

La transmittance du premier hologramme vaut :

$$H_{d_u,d_v}(u, v, 0).$$

Choisissons les périodes $d_u$ et $d_v$ de façon que :

$$Z_T^{d_v} = 4 \, Z_T^{d_u}$$

Considérons la distance z telle que :

$$z = \frac{1}{4}.Z_T^{d_v} = \frac{1}{4}.(2d_v^2 / \lambda) = Z_T^{d_u}.$$

La quantité $H_{d_u,d_v}$, (u, v, z) vérifie alors l'égalité suivante :

$$H_{d_u,d_v}(u, v, z) = 2^{-\frac{1}{2}} (A + B)$$

avec :

$$A = e^{-i\frac{\pi}{4}} \cdot H_{d_u, d_v}(u, v, 0)$$

$$B = e^{+i\frac{\pi}{4}} \cdot H_{d_u, d_v}\left(u, v - \frac{d_v}{2}, 0\right).$$

A la distance z du premier hologramme, qui est une distance fractionnaire de Talbot , on obtient donc la somme de deux répliques du premier hologramme, qui sont décalées de la quantité $d_v/2$ et respectivement multipliées par

$$e^{-i\frac{\pi}{4}} \text{ et } e^{+i\frac{\pi}{4}},$$

ce qui est équivalent à un hologramme à quatre niveaux de phase de valeurs indépendantes sur une distance $d_v/2$ selon v.

Conformément à la présente invention, l'hologramme, ou deuxième hologramme, que permet de former le deuxième modulateur de phase binaire, est inséré à cette distance fractionnaire z pour que les deux hologrammes de phase binaire ainsi disposés l'un par rapport à l'autre forment un hologramme à quatre niveaux de phase.

Si les deux hologramme de phase binaire sont programmables, ce qui est le cas avec des modulateurs du genre SBEASLM, le dispositif optique obtenu est utilisable pour réaliser des hologrammes calculés par ordinateur à haute efficacité de diffraction.

L'algorithme de recherche des deux hologrammes binaires en vue de répondre à un problème de diffraction donné, est déterminable par l'homme du métier.

Des méthodes comme la recherche binaire directe ou le recuit simulé sont utilisables.

A ce sujet on consultera les documents suivants :

(4) M.A. Seldowitz, J.P. Allebach and D.W. Sweeney, "Synthesis of digital holograms by direct binary search", Applied Optics, vol.26, n°14, p.2788 à 2798, 1987.
(5) J. Turunen, A. Vasara, J. Westerholm, "Kinoform phase relief synthesis : a stochastic method", Opt. Eng., vol. 28, n°11, p.1162 à 1167, 1989.

Comme on l'a vu plus haut, on utilise de préférence des SBEASLM dans la présente invention en tant que modulateurs spatiaux pour réaliser les hologrammes binaires.

En effet, il s'agit de composants très intégrés et rapides.

Il est à noter que la taille des pixels des modulateurs spatiaux est un paramètre critique.

En effet, une grande taille de pixel implique une grande période pour un hologramme périodique et donc une grande distance de Talbot relative à cette période, ce qui augmente la taille globale du dispositif.

Des SBEASLM de 256x256 pixels, avec des pixels de 40 µm, sont disponibles auprès du laboratoire centrale de recherche de la société Thorn EMI.

Des SBEASLM possédant des pixels de 10 µm de côté sont également réalisables.

Avec le cristal liquide CS-2005 smectique C* de la société Chisso, qui possède un angle de basculement voisin de 45°, et en travaillant en polarisation linéaire, de tels SBEASLM (utilisés comme lames quart d'onde en réflexion) permettent de réaliser une modulation $\{0,\pi\}$ sans polariseur.

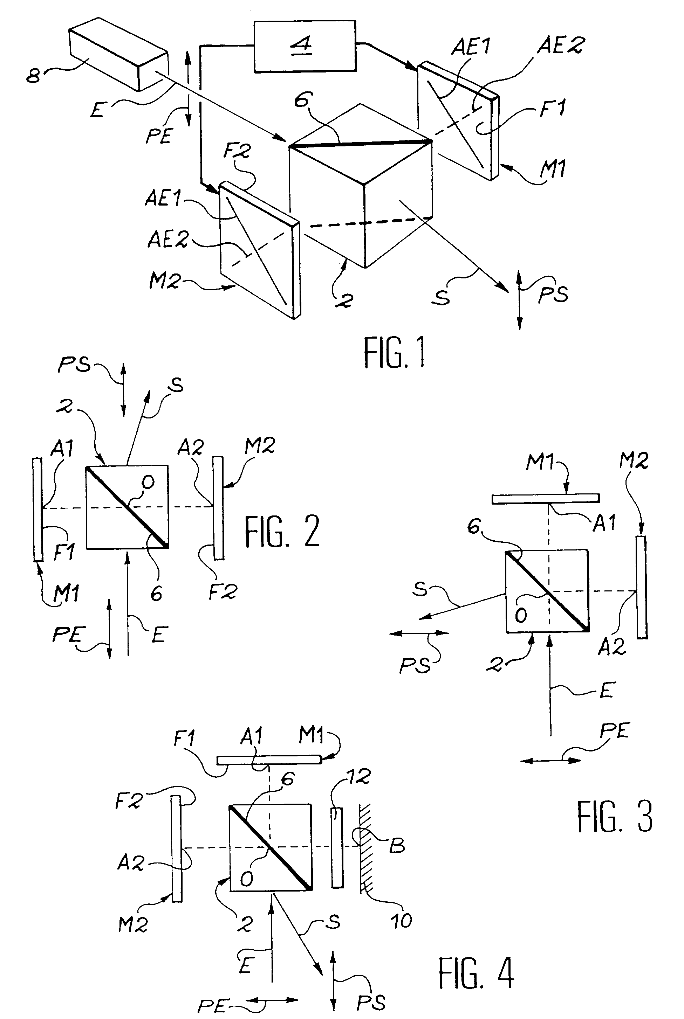

Un dispositif de diffraction de lumière conforme à la présente invention est schématiquement représenté en perspective sur la figure 1.

Ce dispositif comprend deux SBEASLM qui portent respectivement les références M1 et M2 et qui sont appelés plus simplement "modulateurs" par la suite.

Le dispositif de la figure 1 comprend aussi un cube séparateur de faisceaux polarisant 2 *("polarizing beamsplitter cube")*.

Ce cube 2 est placé entre les deux modulateurs M1 et M2.

Des moyens 4 de commande des modulateurs M1 et M2 permettent la formation, à partir de ces deux modulateurs M1 et M2, de deux hologrammes choisis par les utilisateurs.

Chacun des modulateurs M1 et M2 comprend une couche de cristal liquide ferroélectrique dont l'angle de basculement vaut 45° (et qui se trouve en regard du cube 2).

On a respectivement noté F1 et F2 les faces des modulateurs M1 et M2 du côté desquelles se trouve le cristal liquide ferroélectrique.

Ces faces F1 et F2 sont en regard du cube séparateur de faisceau polarisant 2.

On sait qu'un tel cube comprend un moyen séparateur de faisceaux polarisant dans un plan diagonal qui porte la référence 6 sur la figure 1 et qui contient deux arêtes du cube appartenant à deux faces distinctes de celui-ci.

Comme on le voit sur la figure 1, les faces F1 et F2 respectives des modulateurs M1 et M2 sont parallèles l'une à l'autre ainsi qu'à deux faces opposées du cube 2 et forment chacune un angle de 45° avec le plan diagonal 6.

Une source 8 de lumière monochromatique et polarisée rectilignement fournit un faisceau lumineux E, ou faisceau d'entrée, dont la polarisation rectiligne est représentée par le symbole PE sur la figure 1.

Ce faisceau E est parallèle aux faces respectives F1 et F2 des modulateurs M1 et M2.

De plus, ce faisceau fait un angle de 45° avec le plan diagonal 6 du cube 2 et rencontre ce plan diagonal en le centre O du cube 2 (figure 2).

On précise que la direction de polarisation PE du faisceau E est parallèle aux faces F1 et F2 respectives des modulateurs M1 et M2 ainsi qu'au plan diagonal 6.

Le cube 2 (ou plus exactement le moyen séparateur de faisceau polarisant qui se trouve dans le plan diagonal 6) réfléchit la lumière ayant la polarisation PE, que l'on peut appeler "polarisation verticale".

En outre, ce cube transmet la lumière dont la polarisation est perpendiculaire à la précédente et que l'on peut appeler "polarisation horizontale".

Pour une certaine tension électrique appliquée aux modulateurs M1 et M2, l'axe extraordinaire du cristal liquide ferroélectrique de ces modulateurs M1 et M2 prend une certaine direction AE1.

Lorsque la tension électrique opposée est appliquée à ces modulateurs, cet axe extraordinaire du cristal liquide prend une direction AE2 perpendiculaire à la direction AE1.

Dans le cas du dispositif de la figure 1, les directions AE1 correspondant respectivement aux modulateurs M1 et M2 sont parallèles et font un angle de 45° avec la polarisation PE, comme on le voit sur la figure 1.

De même, les directions AE2 correspondant respectivement aux modulateurs M1 et M2 sont parallèles et font aussi un angle de 45° avec la polarisation PE.

On commande le modulateur M1 de façon à créer un hologramme périodique suivant deux directions perpendiculaires U et V, la période suivant V étant le double de la période suivant U.

Dans une période suivant V il y a donc deux fois plus de pixels du modulateur M1 que dans une période suivant U.

On commande le modulateur M2 de façon à créer un autre hologramme (périodique ou non périodique).

On reviendra plus loin sur la distance entre les modulateurs M1 et M2.

Le faisceau E interagit avec l'hologramme à quatre niveaux de phase engendré grâce au dispositif de la figure 1 et se trouve modulé spatialement par cet hologramme.

Le dispositif de la figure 1 fournit un faisceau diffracté S résultant de cette modulation spatiale.

La polarisation PS de ce faisceau S est parallèle à la polarisation PE.

On précise que le faisceau E se réfléchit sur le plan diagonal 6 puis interagit avec l'hologramme engendré par le modulateur M1, d'où l'obtention d'un faisceau à polarisation horizontale.

Ce faisceau à polarisation horizontale est alors transmis par le plan diagonal 6 et interagit avec l'hologramme engendré par le modulateur M2 pour donner un faisceau à polarisation verticale.

Ce dernier est alors réfléchi par le plan diagonal 6 et l'on obtient en sortie le faisceau S de polarisation PS (verticale).

On note A1 le pied de la perpendiculaire abaissée de 0 sur la face F1 du modulateur n1.

De même, on note A2 le pied de la perpendiculaire abaissée de 0 sur la face F2 du modulateur M2.

On précise que la distance A1A2 entre les faces respectives F1 et F2 des modulateurs M1 et M2 est égale au quart de la distance de Talbot $Z_T$ relative au modulateur M1 que rencontre en premier la lumière fournie par la source 8 et relative à la période suivant V dont il a été question plus haut.

On pourrait également disposer les modulateurs à une distance l'un de l'autre égale à un multiple impair de cette valeur $Z_T/4$.

Afin de répondre à différentes contraintes technologiques, la distance de Talbot peut être choisie en réglant différents paramètres tels que :

- la longueur d'onde dans le vide de la source 8,
- l'indice optique moyen rencontré par la lumière issue de cette source et
- la période de l'hologramme que permet d'obtenir le modulateur M1.

Les tableaux I à V qui figurent à la fin de la présente description donnent les distances de Talbot divisées par quatre $Z_T/4$, exprimées en cm, pour différentes tailles de pixels (10, 20, 30 et 40 $\mu m$) et deux longueurs d'onde (0,633 $\mu m$ et 1,55 $\mu m$) dans l'air, c'est-à-dire pour un indice optique sensiblement égal à 1 (alors que dans le verre cet indice optique est égal à environ 1,67, ce qui réduit la distance de Talbot).

Chaque tableau correspond à une taille différente de la période suivant V du premier hologramme (hologramme formé grâce au modulateur M1).

Les chiffres des tableaux qui sont en caractères gras correspondent à des dispositifs particulièrement compacts.

En théorie, une infinité de périodes est nécessaire dans le modulateur M1 de la figure 1 pour satisfaire les conditions de l'effet Talbot.

Cependant, dans la pratique, l'effet Talbot peut être observé avec seulement un petit nombre de périodes.

On a également observé un extremum local dans l'efficacité de diffraction pour une distance $Z_T/4^n$ entre les deux modulateurs M1 et M2, n étant un nombre entier supérieur à 1.

On a donc une grande liberté dans le positionnement des modulateurs M1 et M2.

On peut utiliser des hologrammes de taille 32x32 pixels ou 64x64 pixels ou encore 128x128 pixels.

Les modes de réalisation particuliers du dispositif objet de l'invention, qui sont schématiquement représentés en vue de dessus sur les figures 3 à 6, utilisent les deux modulateurs M1 et M2 (SBEASLM) de la figure 1.

Les moyens 4 de commande de ces modulateurs ne sont pas représentés sur les figures 3 à 6 (ni d'ailleurs sur la figure 2) et il en est de même pour la source 8.

Le dispositif de la figure 3 se déduit de celui de la figure 2 en faisant subir au modulateur M1 une rotation de +90° dans le sens des aiguilles d'une montre autour d'un axe perpendiculaire au plan de la figure 2 et passant par le centre O du cube 2.

Les modulateurs M1 et M2 sont alors adjacents et perpendiculaires l'un à l'autre.

Dans le cas de la figure 3, c'est la distance A1O+OA2 qui est égale à $Z_T/4$.

On notera que le dispositif de la figure 3 peut être réalisé de façon plus compacte que celui de la figure 2.

On précise que pour l'utilisation de ce dispositif de la figure 3, on utilise un faisceau d'entrée E à polarisation horizontale PE.

Ce faisceau est alors transmis par le plan diagonal 6 du cube 2 pour parvenir au modulateur M1.

Le faisceau de sortie S a aussi une polarisation horizontale PS.

Ainsi le dispositif de la figure 3 conserve la polarisation comme le dispositif de la figure 2.

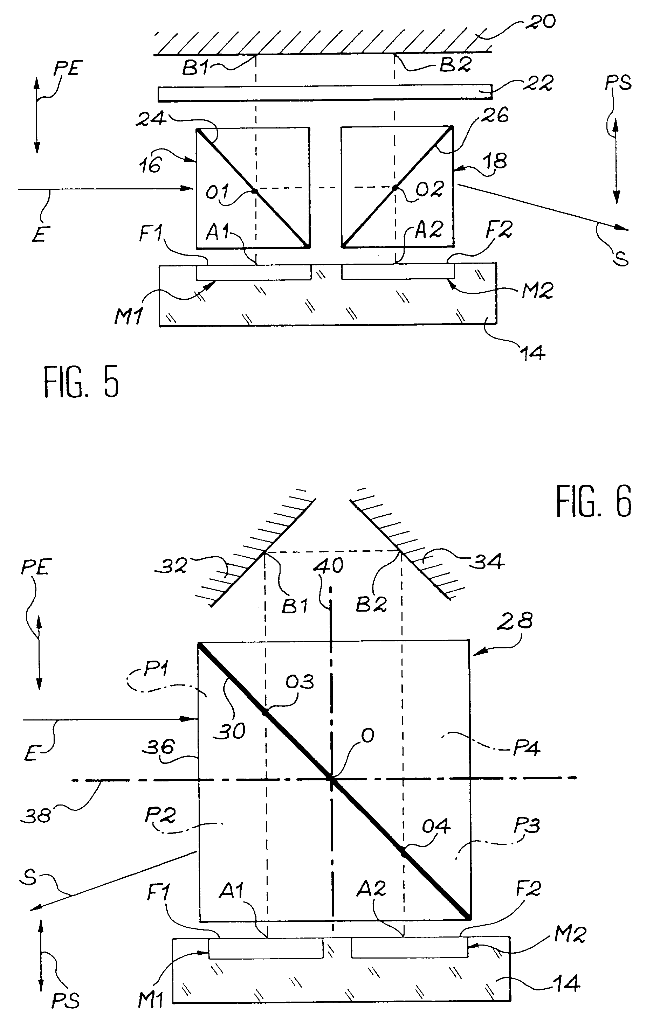

Le dispositif de la figure 4 comprend, en plus des modulateurs M1 et M2 et du cube 2 :

- un miroir plan 10 et
- une lame quart d'onde 12.

Le dispositif de la figure 4 se déduit de celui de la figure 3 en faisant subir au modulateur M2 une rotation de 180° dans le sens des aiguilles d'une montre autour d'un axe passant par le centre O du cube et perpendiculaire au plan de la figure 3.

De plus, le miroir plan 10 est placé parallèlement à la face F2 de ce modulateur M2, à l'opposé de ce modulateur M2 par rapport au cube 2.

La lame quart d'onde 12 est placée parallèlement à ce miroir, entre ce dernier et le cube 2.

Pour le fonctionnement du dispositif de la figure 4, on utilise un faisceau d'entrée E à polarisation horizontale PE.

Le faisceau de sortie S a une polarisation verticale PS.

On considère le point B du miroir qui est l'intersection de celui-ci avec une droite passant par le centre O du cube et perpendiculaire à ce miroir.

Le point d'intersection de cette droite avec la face F2 du modulateur M2 est le point A2.

Dans le cas du dispositif de la figure 4, l'égalité suivante s'applique :

$$A1O + OB + BA2 = Z_T/4.$$

Le dispositif de la figure 4 est ainsi réalisable de façon plus compacte que le dispositif de la figure 3.

Les dispositifs conformes à l'invention, qui sont schématiquement représentés sur les figures 5 et 6, utilisent encore les deux modulateurs M1 et M2.

Cependant, dans le cas de ces figures 5 et 6, ces deux modulateurs sont formés sur un même substrat 14.

On peut même utiliser, en tant que modulateurs M1 et M2, dans le cas des figures 5 et 6, deux parties distinctes d'un même SBEASLM.

Le dispositif de la figure 5 fonctionne en transmission et comprend, en plus des modulateurs M1 et M2 :

- deux cubes séparateurs de faisceaux polarisants 16 et 18,
- un miroir plan 20 et
- une lame quart d'onde 22.

Comme on le voit sur la figure 5, les deux cubes 16 et 18 sont respectivement placés en regard des modulateurs M1 et M2.

Le miroir 20 est placé à l'opposé des modulateurs par rapport à ces cubes.

La lame quart d'onde 22 est placée entre ce miroir et ces cubes, comme on le voit sur la figure 5.

Plus précisément, les plans diagonaux respectifs 24 et 26 des cubes 16 et 18, où se trouvent les moyens séparateurs de faisceaux polarisants proprement dits, sont perpendiculaires l'un à l'autre.

De plus, ces plans diagonaux 24 et 26 forment respectivement des angles de 45° avec les faces F1 et F2 des modulateurs M1 et M2.

Le miroir 20 et la lame 22 sont parallèles à ces faces F1 et F2.

Les faces des cubes 16 et 18, qui sont respectivement placées en regard des faces F1 et F2 des modulateurs M1 et M2, sont parallèles à ces faces F1 et F2.

Dans le cas des figures 5 et 6, dans chacun des deux états du cristal liquide ferroélectrique que contiennent les modulateurs M1 et M2, les axes extraordinaires du cristal liquide ferroélectrique des deux modulateurs M1 et M2 sont parallèles.

De plus, ils font un angle de 45° avec la direction de polarisation PE du faisceau d'entrée E.

Le dispositif de la figure 5 fonctionne en transmission.

Pour le fonctionnement de ce dispositif, on utilise un faisceau lumineux d'entrée E à polarisation verticale.

Ceci signifie, dans le cas de la figure 5, que la direction de polarisation de ce faisceau E est parallèle :

- aux plans diagonaux 24 et 26 des cubes 16 et 18 et
- aux faces F1 et F2 des modulateurs M1 et M2.

Le faisceau de sortie S a également une polarisation verticale PS.

Dans le cas de la figure 5, le faisceau d'entrée E interagit d'abord avec le modulateur M1 après s'être réfléchi sur le plan diagonal 24 du cube 16.

Dans le cas du dispositif de la figure 5, si l'on considère encore la distance de Talbot $Z_T$ du modulateur M1, l'égalité suivante s'applique :

$$A1B1 + B1O1 + O1O2 + O2B2 + B2A2 = Z_T/4$$

Dans cette égalité, O1 et O2 représentent respectivement les centres des cubes 16 et 18.

A1 représente l'intersection de la face F1 du modulateur M1 avec une droite passant par O1 et perpendiculaire à cette face F1.

Le point B1 est l'intersection de cette droite et du miroir plan 20.

Le point A2 est l'intersection de la face F2 du modulateur M2 avec une autre droite passant par O2 et perpendiculaire à cette face F2.

Le point B2 est l'intersection de cette autre droite passant par O2 avec le miroir plan 20.

On notera que le dispositif de la figure 5 conserve la polarisation.

Le dispositif de la figure 6 fonctionne en réflexion et n'utilise qu'un seul cube séparateur de faisceaux polarisant.

Ce cube porte la référence 28 sur la figure 6 et le plan diagonal de ce cube, où se trouve le moyen séparateur de faisceaux polarisant proprement dit, porte la référence 30.

En plus des modulateurs M1 et M2 et du cube 28, le dispositif de la figure 6 comprend deux miroirs plans 32 et 34.

Ces deux miroirs plans 32 et 34 sont perpendiculaires l'un à l'autre.

Le cube 28 se trouve entre

- l'ensemble formé par ces deux miroirs 32 et 34 et
- l'ensemble formé par les deux modulateurs M1 et M2, comme on le voit sur la figure 6.

Le plan diagonal 30 du cube 28 fait un angle de 45° avec les faces respectives F1 et F2 des modulateurs M1 et M2.

Le miroir plan 32 est placé à l'opposé du modulateur M1 par rapport au cube 28.

Le miroir plan 34 est placé à l'opposé du modulateur M2 par rapport à ce cube 28.

Le miroir 32 fait un angle de 45° avec la face F1 du modulateur M1.

De plus, ce miroir 32 est perpendiculaire au plan diagonal 30.

Le miroir 34 fait un angle de 45° avec la face F2 du modulateur M2.

De plus, ce miroir 34 est parallèle au plan diagonal 30.

Pour le fonctionnement du dispositif de la figure 6, on utilise un faisceau d'entrée E à polarisation verticale PE.

Ceci signifie que la direction de cette polarisation PE est parallèle :

- au plan diagonal 30 et
- aux faces respectives F1 et F2 des modulateurs M1 et M2.

Le faisceau d'entrée E à polarisation verticale se réfléchit sur le plan diagonal 26 puis interagit avec le modulateur M1.

Le faisceau de sortie S a aussi une polarisation verticale PS.

Il est à noter que ce faisceau S sort par la face 36 du cube 28 par laquelle le faisceau d'entrée E pénètre dans le dispositif de la figure 6.

En considérant :

- un plan 38 passant par le centre O du cube 28, perpendiculaire à la face 36 du cube 28 et parallèle aux faces F1 et F2 des modulateurs M1 et M2 et
- un autre plan 40 passant par le centre O du cube 28 et parallèle à la face 36 du cube 28,

ces plans 38 et 40 partagent le cube 28 en quatre parallélépipèdes rectangles.

Deux de ces parallélépipèdes se trouvent en regard du modulateur M1 et ont les références P1 et P2.

Les deux autres parallélépipèdes se trouvent en regard du modulateur M2 et ont les références P3 et P4.

On considère le point O3, centre du parallélépipède P1 le plus éloigné du modulateur M1.

On considère aussi le point O4, centre du parallélépipède P3 le plus proche du modulateur M2.

Le faisceau lumineux d'entrée E pénètre dans le cube 28 et atteint le point O3 à partir duquel il se réfléchit en direction du modulateur M1.

La droite passant par le point O3 et perpendiculaire à la face F1 du module M1 rencontre cette face F1 au point A1 et rencontre le miroir 32 au point B3.

La droite passant par le point O4 et perpendiculaire à la face F2 du modulateur M2 rencontre cette face F2 au point A2 et rencontre le miroir 34 au point B4.

Dans le cas de la figure 6, l'égalité suivante s'applique :

$$A1B3 + B3B4 + B4A2 = Z_T/4$$

Comme dans le cas des figures 1 à 5, la quantité $Z_T$ représente la distance de Talbot relative au modulateur M1 qui est rencontré en premier par le faisceau E.

En termes de compacité, les configurations des figures 5 et 6 sont optimales car les chemins optiques y sont repliés.

On notera que le dispositif de la figure 6 présente un avantage sur celui de la figure 5 du fait de la possibilité de réglage, à l'aide des deux miroirs plans 28 et 30, de l'alignement des deux hologrammes que l'on obtient avec les modulateurs M1 et M2.

On peut donner des ordres de grandeurs de la taille d'un dispositif global conforme à l'invention.

Le tableau VI, qui se trouve à la fin de la présente description, donne des exemples pour diverses configurations et pour :

- une taille de pixel donnée (10 μm),
- une longueur d'onde donnée (1,55 μm),
- une période selon V donnée (64 pixels par période),
- une résolution donnée des deux SBEASLM (256x256) et
- un indice optique égal à 1.

Le taille de chaque SBEASLM est d'environ 2,6 mm x 2,6 mm.

Dans ces conditions, on utilise un cube séparateur polarisant de 5 mm de côté.

Sur ce tableau VI, les paramètres X, Y et Z représentent les longueurs des côtés d'un parallélépipède dans lequel on peut placer le dispositif correspondant à une configuration donnée.

TABLEAU I

| $Z_T/4$ en cm pour une période de 8 pixels | | | | | |
|---|---|---|---|---|---|
| | | Taille du pixel en μm | | | |
| | | 10 | 20 | 30 | 40 |
| Longueur d'onde en μm | 0,633 | 0,5 | 2,02 | 4,5 | 8,08 |
| | 1,55 | 0,2 | 0,83 | 1,86 | 3,3 |

TABLEAU II

| $Z_T/4$ en cm pour une période de 16 pixels | | | | | |
|---|---|---|---|---|---|
| | | Taille du pixel en µm | | | |
| | | 10 | 20 | 30 | 40 |
| Longueur d'onde en µm | 0,633 | **2,02** | 8,08 | 18,1 | 32,4 |
| | 1,55 | 0,83 | 3,3 | 7,4 | 13,2 |

TABLEAU III

| ZT/4 en cm pour une période de 32 pixels | | | | | |
|---|---|---|---|---|---|
| | | Taille du pixel en µm | | | |
| | | 10 | 20 | 30 | 40 |
| Longueur d'onde en µm | 0,633 | **8,1** | 32,3 | 72,8 | 129,4 |
| | 1,55 | **3,3** | 13,2 | 29,7 | 52,8 |

TABLEAU IV

| $Z_T/4$ en cm pour une période de 64 pixels | | | | | |
|---|---|---|---|---|---|
| | | Taille du pixel en µm | | | |
| | | 10 | 20 | 30 | 40 |
| Longueur d'onde en µm | 0,633 | 32,3 | 130 | 291 | 517 |
| | 1,55 | **13,21** | 52,8 | 119 | 211,4 |

TABLEAU V

| $Z_T/4$ en cm pour une période de 128 pixels | | | | | |
|---|---|---|---|---|---|
| | | Taille du pixel en µm | | | |
| | | 10 | 20 | 30 | 40 |
| Longueur d'onde en µm | 0,633 | 129 | 517 | 1164 | 2070 |
| | 1,55 | 52,8 | 211 | 475 | 846 |

TABLEAU VI

| Configuration de la : | Taille du dispositif en mm | | |
|---|---|---|---|
| | X | Y | Z |
| figure 1 | 5 | 5 | 132 |
| figure 3 | 5 | 67 | 67 |
| figure 4 | 5 | 67 | 33 |
| figure 5 ou 6 | 5 | 40 | 30 |

**Revendications**

1. Dispositif de diffraction de lumière caractérisé en ce qu'il comprend :

   - des premier (M1) et deuxième (M2) modulateurs spatiaux de lumière adressables électriquement, à cristal liquide sur substrat semiconducteur, chacun des premier et deuxième modulateurs fonctionnant par réflexion et permettant de créer un hologramme binaire reconfigurable, l'hologramme créé avec le premier modulateur étant périodique suivant deux directions perpendiculaires, la période suivant l'une de ces deux directions étant égale au double de l'autre période suivant l'autre direction, et

- au moins un séparateur de faisceau polarisant (2; 16, 18; 28), la lumière étant dirigée du premier vers le deuxième modulateur par l'intermédiaire de ce séparateur de faisceau, le chemin optique entre les premier et deuxième modulateurs étant égal à $(2k+1)Z_T/4^n$, où k et n sont des nombres entiers naturels, n étant différent de zéro, et $Z_T$ est la distance de Talbot relative à l'hologramme obtenu au moyen du premier modulateur et à ladite période,

les premier et deuxième modulateurs étant agencés par rapport au séparateur de faisceau polarisant de façon à obtenir un hologramme reconfigurable à quatre niveaux de phase.

2. Dispositif selon la revendication 1, caractérisé en ce que le cristal liquide est ferroélectrique.

3. Dispositif selon la revendication 2, caractérisé en ce que l'angle de basculement de ce cristal liquide ferroélectrique vaut sensiblement 45°.

4. Dispositif selon l'une quelconque des revendications 1 à 3, caractérisé en ce que le substrat est en silicium.

5. Dispositif selon l'une quelconque des revendications 1 à 4, caractérisé en ce que le nombre k est égal à zéro.

6. Dispositif selon l'une quelconque des revendications 1 à 5, caractérisé en ce que le nombre n est égal à un.

7. Dispositif selon l'une quelconque des revendications 1 à 6, caractérisé en ce que les premier (M1) et deuxième (M2) modulateurs spatiaux sont parallèles et placés de part et d'autre du séparateur de faisceau polarisant (2).

8. Dispositif selon l'une quelconque des revendications 1 à 6, caractérisé en ce que les premier (M1) et deuxième (M2) modulateurs spatiaux sont perpendiculaires et adjacents.

9. Dispositif selon l'une quelconque des revendications 1 à 6, caractérisé en ce que les premier (M1) et deuxième (M2) modulateurs spatiaux sont perpendiculaires et adjacents et en ce que le dispositif comprend en outre :

- un miroir plan (10) parallèle au deuxième modulateur (M2), ce deuxième modulateur et le miroir plan étant placés de part et d'autre du séparateur de faisceau polarisant (2), et
- une lame quart d'onde (12) parallèle au miroir plan et interposée entre celui-ci et le séparateur de faisceau polarisant.

10. Dispositif selon l'une quelconque des revendications 1 à 6, caractérisé en ce que les premier (M1) et deuxième (M2) modulateurs spatiaux ont le même substrat (14), en ce que le dispositif comprend deux séparateurs de faisceau polarisants (16, 18), qui sont respectivement placés en regard des premier (M1) et deuxième (M2) modulateurs spatiaux, et en outre :

- un miroir plan (20) qui est parallèle à ces premier et deuxième modulateurs spatiaux, les séparateurs de faisceau polarisants étant interposés entre ce miroir plan et les premier et deuxième modulateurs spatiaux, et
- une lame quart d'onde (22) qui est interposée entre ce miroir plan et les séparateurs de faisceau polarisants.

11. Dispositif selon l'une quelconque des revendications 1 à 6, caractérisé en ce que les premier (M1) et deuxième (M2) modulateurs spatiaux ont le même substrat (14) et en ce que le dispositif comprend en outre deux miroirs plans perpendiculaires (32, 34), le séparateur de faisceau polarisant (28) étant placé entre ces deux miroirs plans et les premier et deuxième modulateurs spatiaux.

12. Dispositif selon l'une quelconque des revendications 1 à 11, caractérisé en ce que les premier (M1) et deuxième (M2) modulateurs spatiaux sont identiques.

FIG. 1

FIG. 2

FIG. 3

FIG. 4

EP 0 715 231 A1

FIG. 5

FIG. 6

13

EP 0 715 231 A1

Office européen
des brevets

**RAPPORT DE RECHERCHE EUROPEENNE**

Numero de la demande
EP 95 40 2647

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | OPTICS LETTERS, vol. 19, no. 20, 15 Octobre 1994 WASHINGTON US, pages 1654-1656, H. HAMAM ET AL. 'FRACTIONAL TALBOT FOUR-LEVEL PHASE-ONLY HOLOGRAMS USING FERROELECTRIC LIQUID-CRYSTAL SPATIAL LIGHT MODULATORS' * le document en entier * --- | 1 | G03H1/02 G03H1/08 |
| A | OPTICS COMMUNICATIONS, vol. 109, no. 3/4, 1 Juillet 1994 AMSTERDAM NL, pages 222-226, T.D. WILKINSON ET AL. 'DYNAMIC ASYMMETRIC BINARY HOLOGRAMS USING A FERROELECTRIC LIQUID CRYSTAL SPATIAL LIGHT MODULATOR' * page 222, colonne de droite, ligne 6 - ligne 8 * --- | 1 | |
| A | ELECTRONICS LETTERS, vol. 29, no. 18, 2 Septembre 1993 ENAGE GB, pages 1661-1663, S.E. BROOMFIELD ET AL. 'FOUR-LEVEL, PHASE ONLY, SPATIAL LIGHT MODULATOR' * figure 2 * --- | 1 | **DOMAINES TECHNIQUES RECHERCHES (Int.Cl.6)** G03H |
| A | APPLIED OPTICS, vol. 33, no. 14, 10 Mai 1994 NEW YORK US, pages 2795-2803, D.C. O BRIEN ET AL. 'DYNAMIC HOLOGRAPHIC INTERCONNECTS THAT USE FERROELECTRIC LIQUID-CRYSTAL SPATIAL LIGHT MODULATORS' * page 2796, colonne de gauche * --- | 3 | |

-/--

Le présent rapport a été établi pour toutes les revendications

| Lieu de la recherche | Date d'achèvement de la recherche | Examinateur |
|---|---|---|
| LA HAYE | 7 Mars 1996 | Krametz, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

14

EP 0 715 231 A1

Office européen
des brevets

**RAPPORT DE RECHERCHE EUROPEENNE**

Numero de la demande

EP 95 40 2647

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | APPLIED OPTICS, vol. 31, no. 20, 10 Juillet 1992 NEW YORK US, pages 3917-3929, MARK O. FREEMAN ET AL. 'QUANTIZED COMPLEX FERROELECTRIC LIQUID CRYSTAL SPATIAL LIGHT MODULATORS' --- | | |
| D,A | INST. PHYS. CONF. SER. NO 139: PART II, OPT. COMPUT. INT. CONF. EDINBURGH, AUG. 1994, (B.S. WHERRETT, ED.), 1995 BRISTOL GB, pages 187-190, D.C. O BRIEN ET AL. 'A COMPACT HOLOGRAPHICALLY ROUTED OPTICAL CROSSBAR USING A FERROELECTRIC LIQUID-CRYSTAL OVER SILICON SPATIAL LIGHT MODULATOR' --- | | |
| A | OPTIK, vol. 79, no. 1, 1988 STUTTGART DE, pages 41-45, ADOLF W. LOHMANN 'AN ARRAY ILLUMINATOR BASED ON THE TALBOT-EFFECT' ----- | | DOMAINES TECHNIQUES RECHERCHES (Int.Cl.6) |

Le présent rapport a été établi pour toutes les revendications

| Lieu de la recherche | Date d'achèvement de la recherche | Examinateur |
|---|---|---|
| LA HAYE | 7 Mars 1996 | Krametz, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................................
& : membre de la même famille, document correspondant

EPO FORM 1503 03.82 (P04C02)

15